# EUROPÄISCHE PATENTANMELDUNG

(11) **EP 4 793 491 A1**
(43) Veröffentlichungstag der Anmeldung: **19.08.2026**
(21) Anmeldenummer: 25157799.5
(22) Anmeldetag: 13.02.2025
(51) Int. Cl.: F03D 7/02

(54) **VERFAHREN ZUM STEUERN EINER WINDENERGIEANLAGE**

(71) Anmelder: Wobben Properties GmbH, 26607 Aurich (DE)
(72) Erfinder: WEGNER, Kai-Uwe, 26409 Wittmund (DE)
(74) Vertreter: Eisenführ Speiser

(57) **Zusammenfassung**

Es wird ein Verfahren zum Steuern einer Windenergieanlage (100) vorgesehen, welche einen Turm (102) und eine Gondel (104) mit einem aerodynamischen Rotor (106) mit mehreren Rotorblättern (108) aufweist, wobei die Rotorblätter (108) eine Rotorblattebene (108a) aufspannen, wobei ein Azimutwinkel der Gondel (104) und damit der Winkel der Rotorblattebene (108a) bezogen auf die vorherrschende Windrichtung (10) mittels eines Azimutantriebs (410) variierbar ist. In einer ersten Betriebsart wird eine Windrichtung (10) erfasst und mindestens ein Azimutantrieb (410), um den aerodynamischen Rotor (106) in einen Azimutwinkel zu fahren, bei welchem die Rotorblattebene (108a) in einem ersten Winkel, nämlich im Wesentlichen senkrecht oder rechtwinklig zur vorherrschenden Windrichtung (10), steht. In einer zweiten Betriebsart, wenn ein Sturm mit einer Windgeschwindigkeit oberhalb eines Schwellwertes erfasst oder vorhergesagt ist, wird ein Azimutwinkel geändert, so dass die Rotorblattebene (108a) sich in einem zweiten Winkel befindet, welcher im Wesentlichen parallel zur vorherrschenden Windrichtung (10) ist.

## Beschreibung

Die vorliegende Erfindung betrifft ein Verfahren zum Steuern einer Windenergieanlage sowie eine Windenergieanlage.

Eine Windenergieanlage weist typischerweise einen Turm und eine Gondel mit einem aerodynamischen Rotor auf. Die Gondel mit dem aerodynamischen Rotor kann hinsichtlich ihrer Azimutposition gedreht werden. Der aerodynamische Rotor weist typischerweise zwei oder drei Rotorblätter auf, welche eine Rotorblattebene aufspannen. In einem Normalbetrieb wird der Azimutwinkel der Gondel derart eingestellt, dass die Rotorblattebene im Wesentlichen senkrecht oder rechtwinklig zur vorherrschenden Windrichtung ausgerichtet ist. Dies ist vorteilhaft, weil damit die Energieeffizienz gesteigert werden kann. Falls die Windenergieanlage ausgeschaltet ist oder bei einem Sturm mit hohen Windgeschwindigkeiten verbleibt die Rotorblattebene zur Vermeidung von übermäßigen mechanischen Belastungen im Wesentlichen senkrecht oder rechtwinklig zur vorherrschenden Windrichtung und der aerodynamische Rotor wird in eine Trudelbetriebsart versetzt, wobei sich der aerodynamische Rotor drehen kann, ohne dass dabei elektrische Leistung erzeugt wird.

Es ist eine Aufgabe der vorliegenden Erfindung, ein Verfahren zum Steuern einer Windenergieanlage sowie eine entsprechende Windenergieanlage vorzusehen, welche auch bei hohen Windgeschwindigkeiten eine mechanische Überlastung reduzieren oder vermeiden kann.

Diese Aufgabe wird durch ein Verfahren zum Steuern einer Windenergieanlage nach Anspruch 1 sowie durch eine Windenergieanlage nach Anspruch 7 gelöst.

Somit wird ein Verfahren zum Steuern einer Windenergieanlage vorgesehen, wobei die Windenergieanlage einen Turm und eine bezüglich des Turms drehbare Gondel aufweist. Die Gondel weist einen aerodynamischen Rotor mit Rotorblättern auf, welche eine Rotorblattebene aufspannen. Der Azimutwinkel der Gondel mit dem aerodynamischen Rotor (d. h. die Ausrichtung der Rotorblattebene) ist mittels eines Azimutantriebs verstellbar. In einer ersten Betriebsart, nämlich der Normalbetriebsart, wird der Azimutwinkel der Gondel so eingestellt, dass sich die Rotorblattebene im Wesentlichen senkrecht oder rechtwinklig zur vorherrschenden Windrichtung befindet. Damit kann die Windenergieanlage die kinetische Energie des Windes optimal in elektrische Energie umwandeln. Eine zweite Betriebsart der Windenergieanlage wird aktiviert, wenn ein Sturm mit sehr hohen Windgeschwindigkeiten im Bereich der Windenergieanlage vorhanden ist oder erwartet wird. Dies kann beispielsweise anhand von lokalen Wetterdaten und/oder Wettervorhersagedaten ermittelt werden. In der zweiten Betriebsart wird der Azimutwinkel der Gondel mittels der Azimutantriebe derart geändert, dass sich die Rotorblattebene im Wesentlichen parallel zur vorherrschenden Windrichtung befindet. Durch diese Stellung der Rotorblätter bezüglich der vorherrschenden Windrichtung wird die Angriffsfläche der Windenergieanlage reduziert, was insbesondere bei Stürmen mit sehr hoher Windgeschwindigkeit (z. B. ein Wirbelsturm wie ein Taifun, ein Zyklon oder ein Hurrikan) zu einer Reduzierung der mechanischen maximalen Belastung führen kann.

Die zweite Betriebsart kann insbesondere dann aktiviert werden, wenn sehr hohe Windgeschwindigkeiten wie beispielsweise bei einem Wirbelsturm erwartet werden.

Damit wird vorgeschlagen, dass der Azimutwinkel der Gondel nicht so eingestellt wird, dass die Rotorblattebene senkrecht zur vorherrschenden Windrichtung ausgerichtet ist (wie es im Stand der Technik üblich ist), sondern dass die Rotorblattebene parallel zur Windrichtung ausgerichtet ist.

Optional kann in der zweiten Betriebsart ein Steuern einer Drehrichtung der Rotorebene um eine Hochachse im Uhrzeigersinn oder gegen den Uhrzeigersinn in Abhängigkeit einer geografischen Position des Sturms zur Windenergieanlage und/oder einer Drehrichtung des Sturms, nämlich im Uhrzeigersinn oder entgegen des Uhrzeigersinns, erfolgen. Ferner können Wettervorhersagedaten bezogen auf die geografische Position der Windenergieanlage mit berücksichtigt werden. Hierbei wird insbesondere die relative Position der Windenergieanlage zu dem vorhergesagten Verlauf des Sturms mit berücksichtigt. Insbesondere kann hierbei berücksichtigt werden, ob sich die Windenergieanlage nördlich oder südlich des vorhergesagten Sturmverlaufs befindet. Die Drehrichtung des Wirbelsturms kann ebenfalls mit berücksichtigt werden. Diese Steuerung kann zu einer Reduzierung der mechanischen Belastung der Rotorblätter und der Windenergieanlage führen.

Durch die Azimutverstellung der Gondel kommt es zu einer Verdrillung der elektrischen Kabel, welche durch den Turm führen und mit elektrischen Komponenten in der Windenergieanlage verbunden sind. Bei der Steuerung des Azimutwinkels muss darauf geachtet werden, dass die Verdrillung einen Schwellwert nicht überschreitet Eine Verdrillung kann vermieden werden, indem die Gondel der Windenergieanlage mittels des mindestens einen Azimutantriebs in die entgegengesetzte Richtung gedreht wird. Wenn mittels der Wettervorhersagedaten erfasst worden ist, dass ein Sturm mit sehr hohen Windgeschwindigkeiten im Bereich der Position der Windenergieanlage erwartet wird, dann kann die Windenergieanlage den Azimutwinkel der Gondel ändern, d. h. die Gondel wird gedreht, um eine Verdrillung zu minimieren. Dies ist vorteilhaft, weil eine aktive Reduzierung der Verdrillung nicht mehr möglich sein kann, wenn der Sturm sich im direkten Bereich der Windenergieanlage befindet. Damit kann die Verdrillung reduziert werden, bevor der Sturm sich im Bereich der Windenergieanlage befindet und die Windenergieanlage beispielsweise ausgeschaltet werden muss. Dies ist ferner insbesondere vorteilhaft, weil die für die Änderung des Azimutantriebs benötigte elektrische Energie aus dem Energieversorgungsnetz entnommen werden kann, solange das Energieversorgungsnetz aktiv ist. Insbesondere bei sehr schweren Stürmen kann es dazu kommen, dass die Energieversorgung ausgeschaltet werden muss, was dazu führt, dass die Windenergieanlage, welche ausgeschaltet ist und damit keinen eigenen Strom erzeugen kann, auch keinen Strom aus dem Energieversorgungsnetz entnehmen kann. Eine aktive Reduzierung der Verdrillung müsste dann mit Energie aus einem Energie-Backup bzw. einen Energiespeicher der Windenergieanlage erfolgen.

Gemäß einem Aspekt wird eine Windenergieanlage mit einem Turm, einer Gondel und einem aerodynamischen Rotor vorgesehen. Der aerodynamische Rotor weist beispielsweise drei Rotorblätter auf, welche eine Rotorblattebene aufspannen. Die Windenergieanlage weist ferner einen Azimutantrieb auf, welcher einen Azimutwinkel der Gondel verstellen kann. Ferner weist die Windenergieanlage eine Steuereinheit zum Steuern des Betriebs der Windenergieanlage auf. Die Steuereinheit ist dazu ausgestaltet, die Windenergieanlage in einer ersten Betriebsart, nämlich beispielsweise einer Normalbetriebsart, den Azimutwinkel so zu steuern, dass sich die Rotorblattebene im Wesentlichen senkrecht zur vorherrschenden Windrichtung befindet. Durch den Wind wird der aerodynamische Rotor in Rotation versetzt, wodurch ein mit dem aerodynamischen Rotor mittelbar oder unmittelbar gekoppelter elektrischer Generator ebenfalls in Rotation versetzt wird und elektrische Energie erzeugt wird.

Die Windenergieanlage kann optional eine Wettereinheit aufweisen, welche Wetterinformationen und/oder Wettervorhersagen empfangen kann. Die Wetterdateneinheit kann die vorliegenden Wetterdaten analysieren, insbesondere um festzustellen, ob ein Sturm mit einer sehr hohen Windgeschwindigkeit im Bereich der Position der Windenergieanlage zu erwarten ist. Wenn ein Sturm mit Windgeschwindigkeiten unterhalb eines Schwellwertes zu erwarten ist, dann bleibt die erste Betriebsart aktiviert. Wenn jedoch ein Sturm mit Windgeschwindigkeiten oberhalb eines Schwellwertes zu erwarten ist, dann kann die Steuereinheit eine zweite Betriebsart aktivieren. In der zweiten Betriebsart wird der Azimutwinkel der Gondel mittels des Azimutantriebs so gesteuert, dass sich die Rotorblattebene im Wesentlichen parallel zur vorherrschenden Windrichtung einstellt.

Die Windenergieanlage kann ferner ein Energie-Backup-System aufweisen. Dieses System kann insbesondere aktiviert werden, wenn die Windenergieanlage nicht mehr an das Energieversorgungsnetz gekoppelt ist oder wenn das Energieversorgungsnetz keine Energie liefern kann. In einem derartigen Fall muss die Windenergieanlage dazu in der Lage sein, mittels der in dem Backup-System vorhandenen Energie die Pitchwinkel der Rotorblätter und/oder den Azimutwinkel der Gondel verstellen zu können, um sicherzustellen, dass die Windenergieanlage optimal zur vorherrschenden Windrichtung ist, um eine mechanische Belastung der Windenergieanlage durch den Sturm zu reduzieren oder zu minimieren.

In der zweiten Betriebsart, während welcher die Windenergieanlage vom Energieversorgungsnetz abgeschnitten ist oder das Energieversorgungsnetz keine Energie zur Verfügung stellen kann, muss beim Betrieb der Azimutantriebe insbesondere darauf geachtet werden, dass nicht zu viel Energie verbraucht wird, da die Windenergieanlage nicht mehr dazu in der Lage sein wird, den Azimutantrieb zu steuern, wenn die in dem Backup-System vorhandene elektrische Energie aufgebraucht ist. Daher ist eine effiziente und vorausschauende Steuerung insbesondere der Azimutantriebe notwendig.

In der zweiten Betriebsart wird die Windenergieanlage so gesteuert, dass eine Reduzierung der mechanischen Belastung aufgrund des Sturms auf die Komponenten der Windenergieanlage reduziert wird. Hierbei ist insbesondere auf ein Energiemanagement zu achten, da die Windenergieanlage in der zweiten Betriebsart nicht mit dem Energieversorgungsnetz gekoppelt ist und/oder keine Energie entnehmen kann. Damit steht der Windenergieanlage nur die Energie in einem Backup-System zur Verfügung, um die wichtigsten Steuerungen durchführen zu können. Bei diesen Steuermaßnahmen oder Steuerungsaktivitäten handelt es sich insbesondere um sicherheitsrelevante Aspekte. Daher können einige der hierfür benötigten Steuermaßnahmen insbesondere so lange durchgeführt werden, wie die Windenergieanlage Energie aus dem Energieversorgungsnetz beziehen kann. Beispielsweise kann die Reduzierung der Verdrillung erfolgen, wenn anhand der Wettervorhersagedaten davon auszugehen ist, dass ein Sturm mit einer großen Windgeschwindigkeit auf die Windenergieanlage treffen wird.

Ferner kann beispielsweise die Drehrichtung der Rotorebene um eine Hochachse im Uhrzeigersinn oder gegen den Uhrzeigersinn in Abhängigkeit einer geografischen Position des Sturms zur Windenergieanlage und/oder einer Drehrichtung des Sturms, nämlich im Uhrzeigersinn oder entgegen des Uhrzeigersinns, in Abhängigkeit zu dem vorhergesagten Verlauf des Sturms eingestellt werden.

Der Uhrzeigersinn ist rechtsdrehend wie bei einer analogen Uhr mit einem Zeiger und gegen den Uhrzeigersinn ist linksdrehend.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt ein Blockschaltbild einer Windenergieanlage, und
- Fig. 3A und 3B: zeigen jeweils eine schematische Ansicht einer Windenergieanlage.

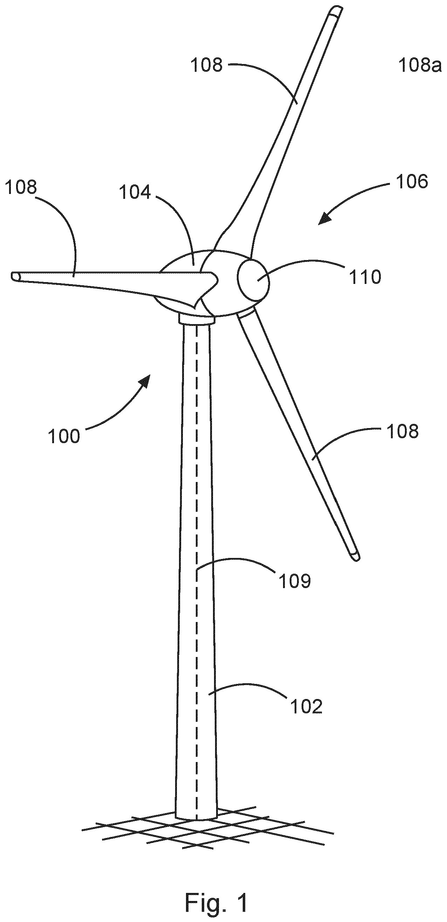

Fig. 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchantriebe an den Rotorblattwurzeln der jeweiligen Rotorblätter 108 verändert werden. Elektrische Kabel 109 können von dem Turm 102 zur Gondel 104 verlaufen.

Der aerodynamische Rotor weist in dem Ausführungsbeispiel von Fig. 1 drei Rotorblätter auf, welche eine Rotorblattebene 108a aufspannen. Ein Azimutwinkel der Gondel 104 mit dem aerodynamischen Rotor 106 lässt sich mittels eines Azimutantriebs verstellen. Die Pitchwinkel der Rotorblätter 108 lassen sich durch Pitchantriebe verstellen.

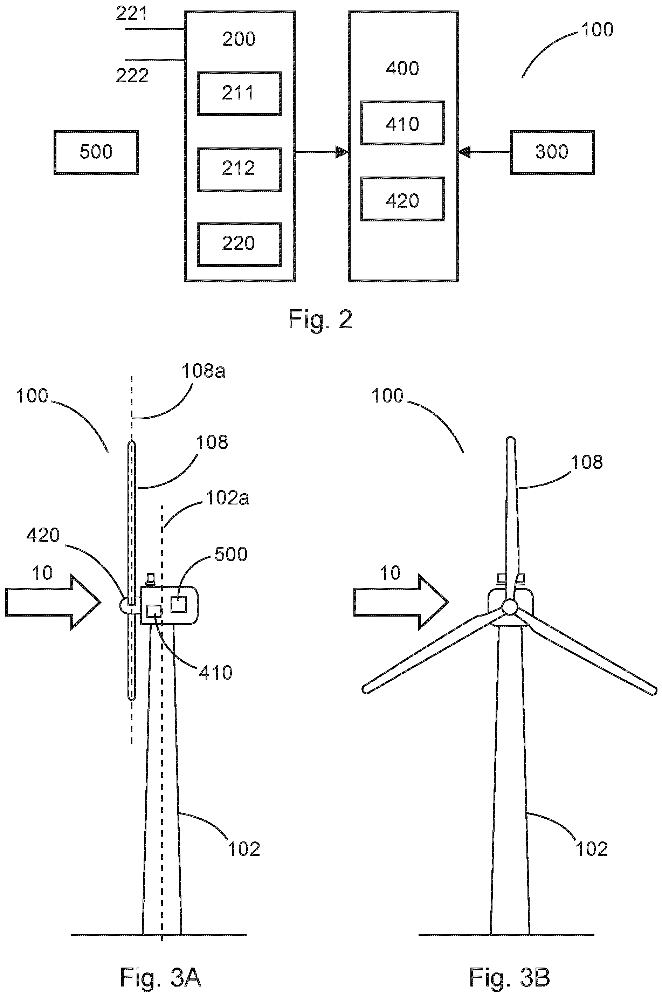

Fig. 2 zeigt ein Blockschaltbild einer Windenergieanlage. Die Windenergieanlage 100 weist einen elektrischen Generator 500, einen Controller 200, ein Energie-Backup-System (Energiespeichersystem) 300 sowie Antriebe 400 auf. Der Controller 200 weist einen Azimutcontroller 211 und einen Pitchcontroller 212 auf. Die Antriebe 400 weisen mindestens einen Azimutantrieb 410 und mindestens einen Pitchantrieb 420 auf. Der Azimutantrieb 410 dient dazu, einen Azimutwinkel der Gondel 104 und damit den Winkel der Rotorblattebene bezogen auf die Windrichtung zu variieren. Die Pitchantriebe 420 dienen dazu, einen Pitchwinkel des Rotorblattes 108 zu variieren. Der Azimutcontroller 211 steuert den Betrieb des Azimutantriebs 410. Ein Pitchcontroller 212 dient dazu, die Pitchantriebe 420 zu steuern.

In einer ersten Betriebsart steuert der Controller 200 den Betrieb der Windenergieanlage, um Energie zu erzeugen. Insbesondere steuert der Azimutcontroller 211 den Azimutantrieb 410, um die Windenergieanlage in den Wind bzw. zur Windrichtung auszurichten. Hierbei wird der Azimutwinkel verstellt, bis die Rotorblattebene 108a im Wesentlichen senkrecht zur vorherrschenden Windrichtung 10 (siehe Fig. 3A, Fig. 3B) steht.

Der Controller 200 schaltet in eine zweite Betriebsart, wenn ein Fehler aufgetreten ist oder wenn gemäß einer Wettervorhersage ein Sturm im Bereich der Windenergieanlage vorhergesagt ist. In einem derartigen Fall kann es dazu kommen, dass das Energieversorgungsnetz ausgeschaltet ist oder teilweise ausgeschaltet ist, so dass die Windenergieanlage nicht mehr mit dem Energieversorgungsnetz verbunden ist. Somit muss die Windenergieanlage den Energiebedarf zur Steuerung der Windenergieanlage anderweitig decken. Hierzu ist das Energie-Backup-System 300 vorgesehen, welche Energie insbesondere dann liefert, wenn die Windenergieanlage nicht mit dem Energieversorgungsnetz verbunden ist oder wenn ein Fehler in dem Energieversorgungsnetz aufgetreten ist. Alternativ dazu kann das Energieversorgungsnetz auch zur Sicherheit ausgeschaltet sein, weil eine Sturmvorhersage vorhanden ist.

In der zweiten Betriebsart steuert der Azimutcontroller 211 den Azimutantrieb 410 so, dass der Azimutwinkel der Gondel verändert wird und zwar so, dass die Rotorblattebene 108a im Wesentlichen parallel zur Windrichtung 10 ist. Damit weist die Windenergieanlage 100 eine geringere Windangriffsfläche auf, so dass die mechanischen Belastungen auf die Windenergieanlage bei einem Sturm mit sehr großen Windgeschwindigkeiten (z. B. ein Wirbelsturm, wie ein Taifun, ein Zyklon oder ein Hurrikan) reduziert werden können.

Die Windenergieanlage weist eine Wetterdateneinheit 220 auf, welche Wettervorhersagedaten 221 und/oder lokale Wetterdaten 222 empfangen oder erfassen kann. Die Daten können an den Controller 200 weitergeleitet werden, um insbesondere den Azimutcontroller 211 zu steuern. Die Wetterdaten, insbesondere die Vorhersagewetterdaten 221, können Daten bezüglich eines herannahenden Sturms mit sehr großer Windgeschwindigkeit wie beispielsweise ein Wirbelsturm wie ein Taifun, ein Zyklon oder ein Hurrikan beinhalten. Anhand der Vorhersagewetterdaten 222 (z.B. geografische Position und Bewegungsrichtung) sowie anhand der (geografischen) Position der Windenergieanlage 100 kann ermittelt werden, ob ein herannahender Sturm einen Eingriff in den Betrieb der Windenergieanlage nötig macht. Dies kann beispielsweise der Fall sein, wenn der Sturm so nah an der Windenergieanlage 100 passiert, dass die zu erwartenden Windgeschwindigkeiten so hoch sind, dass Sicherheitsmaßnahmen seitens der Windenergieanlage zu treffen sind. Diese Sicherheitsmaßnahmen können darin bestehen, dass der Azimutwinkel der Gondel 104 mittels des Azimutantriebs 410 so verändert wird, dass die Rotorblattebene 108a sich im Wesentlichen parallel zur erwarteten Windrichtung befindet.

Anhand der geografischen Positionsinformationen der Windenergieanlage sowie der Vorhersagewetterdaten kann bestimmt werden, in welcher relativen Position sich die Windenergieanlage 100 zum vorhergesagten Kurs des Sturms befindet. Wenn sich die Windenergieanlage beispielsweise nördlich zu dem vorhergesagten Kurs des Sturms befindet, dann kann die Windenergieanlage so gesteuert werden, dass sich der aerodynamische Rotor bzw. die Rotorblattebene in einer ersten Richtung um die Hochachse der Windenergieanlage dreht. Falls mittels der geografischen Positionsinformationen der Windenergieanlage und der Vorhersagewetterdaten die relative voraussichtliche Entfernung des Sturms zur Windenergieanlage erfasst worden ist, dann kann der Controller in den Betrieb der Windenergieanlage eingreifen und beispielsweise die zweite Betriebsart aktivieren.

In der ersten oder zweiten Betriebsart kann der Controller 200 eine Verdrillung von Kabeln 109 erfassen, welche sich von dem Turm 102 in die Gondel 104 erstrecken. Falls die Verdrillung einen Schwellwert überschreitet, kann die Steuereinheit 200 den Azimutantrieb 410 entsprechend so steuern, dass sich die Gondel 104 in die entgegengesetzte Richtung dreht, um die Verdrillung zu reduzieren. Damit kann sichergestellt werden, dass Gegenmaßnahmen zur Verdrillung nicht dann erfolgen müssen, wenn sich die Windenergieanlage in der zweiten Betriebsart befindet und somit jede Ansteuerung der Azimutantriebe 410 durch Energie aus dem Backup-System 300 erfolgen muss. Somit kann die sich in dem Backup-System 300 befindliche Energie nur für die wirklich notwendige Steuerung der Pitchantriebe und des Azimutantriebs verwendet werden.

Gemäß einem Aspekt kann anhand der Vorhersagewetterdaten und des Ladezustands des Backup-Systems das Backup-System (Energiespeichersystem) geladen werden, bevor der Sturm auf die Windenergieanlage trifft, um sicherzustellen, dass die Backup-Systeme ausreichend aufgeladen sind.

Somit kann der Controller 200 dazu dienen, in den Betrieb der Windenergieanlage einzugreifen und die Windenergieanlage auf das Eintreffen des Sturms vorzubereiten.

Das Energie-Backup-System 300 kann als ein Backup-System für den Azimutantrieb, für den Pitchantrieb und/oder als genereller Backup für die Windenergieanlage ausgestaltet sein.

Fig. 3A und 3B zeigen jeweils eine schematische Ansicht einer Windenergieanlage. In Fig. 3A ist eine Seitenansicht der Windenergieanlage 100 und in Fig. 3B ist eine Frontalansicht der Windenergieanlage 100 jeweils mit der Windrichtung 10 gezeigt. In Fig. 3A ist der aerodynamische Rotor 106 senkrecht oder rechtwinklig zur Windrichtung 10 ausgerichtet. In Fig. 3B ist der aerodynamische Rotor 106 und insbesondere die Rotorblattebene 108a im Wesentlichen parallel zur Windrichtung 10 ausgerichtet.

Von der Windenergieanlage aus gesehen kann links die Backbord-Seite und rechts die Steuerbord-Seite sein. In der zweiten Betriebsart kann der Azimutwinkel der Windenergieanlage und insbesondere die Rotorblattebene 108a nach Backbord (links) oder nach Steuerbord (rechts) ausgerichtet werden, um die Windenergieanlage auf den nahenden Sturm vorzubereiten.

Die Steuerung des Azimutantriebs zur Ausrichtung der Rotorblattebene 108 (um die Hochachse 102a) nach links oder rechts kann auf vier grundlegenden Fällen basieren. Insbesondere wenn es sich bei dem Sturm um einen Wirbelsturm wie Taifun oder einen Zyklon handelt, dann führt der Weg des Wirbelsturms im Wesentlichen in westliche Richtung. Hierbei sind gewisse Abweichungen möglich. Die Rotation eines Wirbelsturms auf der Nordhalbkugel erfolgt entgegen des Uhrzeigersinns. Ein Wirbelsturm auf der Südhalbkugel dreht sich im Uhrzeigersinn. Somit können vier mögliche Szenarien vorhanden sein, wenn die relative Position des Sturms zur Windenergieanlage mit betrachtet wird. Die Windenergieanlage kann sich entweder auf der Nord- oder Südhalbkugel befinden. Der Sturmpfad kann ferner nördlich oder südlich gesehen von der Windenergieanlage verlaufen. Auf der Nordhalbkugel kann der Sturmverlauf somit nördlich oder südlich zur Windenergieanlage sein, wobei die Rotation des Sturms entgegen des Uhrzeigersinns erfolgt. Auf der Südhalbkugel kann der Sturmverlauf entweder südlich oder nördlich zu der Position der Windenergieanlage verlaufen, wobei auf der Südhalbkugel die Rotation des Sturms im Uhrzeigersinn erfolgt.

Während der Vorbereitung auf das Auftreffen des Sturms wird der Azimutantrieb aktiviert, um die Gondel und damit die Rotorblattebene so zu drehen, dass die Rotorblattebene im Wesentlichen parallel zu der erwarteten Windrichtung angeordnet ist. Unter Berücksichtigung der erwarteten Windrichtung kann es sinnvoll sein, die Gondel im Uhrzeigersinn oder entgegen des Uhrzeigersinns zu drehen. Insbesondere kann damit erreicht werden, dass die Drehung der Gondel durch die vorherrschende Windrichtung unterstützt wird. Dies ist vorteilhaft, weil damit weniger Energie benötigt wird, um die gewünschte Rotation zu ermöglichen.

### Bezugszeichenliste

- 10: Windrichtung
- 100: Windenergieanlage
- 102: Turm
- 102a: Hochachse
- 104: Gondel
- 106: Rotor
- 108: Rotorblätter
- 108a: Rotorblattebene
- 109: elektrische Kabel
- 110: Spinner
- 200: Controller
- 211: Azimutcontroller
- 212: Pitchcontroller
- 220: Wetterdateneinheit
- 221: Wettervorhersagedaten
- 222: Wetterdaten
- 300: Energie-Backup-System
- 400: Antriebe
- 410: Azimutantrieb
- 420: Pitchantrieb
- 500: elektrischer Generator

## Patentansprüche

1. Verfahren zum Steuern einer Windenergieanlage (100), welche einen Turm (102) und eine Gondel (104) mit einem aerodynamischen Rotor (106) mit mehreren Rotorblättern (108) aufweist, wobei die Rotorblätter (108) eine Rotorblattebene (108a) aufspannen, wobei ein Azimutwinkel der Gondel (104) und damit der Winkel der Rotorblattebene (108a) bezogen auf die vorherrschende Windrichtung (10) mittels eines Azimutantriebs (410) variierbar ist, mit den Schritten:
in einer ersten Betriebsart:
- Erfassen einer Windrichtung (10), und
- Steuern des mindestens einen Azimutantriebs (410), um den aerodynamischen Rotor (106) in einen Azimutwinkel zu fahren, bei welchem die Rotorblattebene (108a) in einem ersten Winkel, nämlich im Wesentlichen senkrecht oder rechtwinklig zur vorherrschenden Windrichtung (10) steht, und
in einer zweiten Betriebsart, wenn ein Sturm mit einer Windgeschwindigkeit oberhalb eines Schwellwertes erfasst oder vorhergesagt ist:
- Ändern des Azimutwinkels, so dass die Rotorblattebene (108a) sich in einem zweiten Winkel befindet, und damit im Wesentlichen parallel zur vorherrschenden Windrichtung (10) ist.

2. Verfahren zum Steuern einer Windenergieanlage (100) nach Anspruch 1, wobei
in der zweiten Betriebsart: Steuern einer Drehrichtung der Rotorblattebene (108a) um eine Hochachse (102a) im Uhrzeigersinn oder gegen den Uhrzeigersinn in Abhängigkeit einer geografischen Position des Sturms zur Windenergieanlage (100) und/oder einer Drehrichtung des Sturms.

3. Verfahren zum Steuern einer Windenergieanlage (100) nach Anspruch 1 oder 2, wobei
in einer zweiten Betriebsart: Steuern der Azimutverstellung der Gondel (104) zur Reduzierung einer Verdrillung von Kabeln (109), welche durch den Turm (102) zur Gondel (104) verlaufen.

4. Verfahren zum Steuern einer Windenergieanlage (100) nach einem der Ansprüche 1 bis 3, wobei
die zweite Betriebsart aktiviert wird, wenn die Windenergieanlage (100) keine Energie aus einem angeschlossenen Energieversorgungsnetz beziehen kann.

5. Verfahren zum Steuern einer Windenergieanlage (100) nach einem der Ansprüche 1 bis 4, wobei
eine Drehrichtung einer Azimutverstellung der Gondel (104) in Abhängigkeit einer relativen Position der Windenergieanlage (100) zu dem Sturm erfolgt.

6. Verfahren zum Steuern einer Windenergieanlage (100) nach einem der Ansprüche 1 bis 5, wobei
der Sturm ein Sturm mit sehr hohen Windgeschwindigkeiten, nämlich ein Wirbelsturm, ein Taifun, ein Zyklon, oder ein Hurrikan ist.

7. Windenergieanlage (100), mit
einem Turm (102),
einer Gondel (104) auf dem Turm (102), wobei die Gondel (104) einen aerodynamischen Rotor (106) mit Rotorblättern (108) aufweist, wobei die Rotorblätter (108) eine Rotorblattebene (108a) aufspannen,
einem Controller (200), welcher dazu ausgestaltet ist, eine erste Betriebsart zu aktivieren, wobei der Controller (200) einen Azimutantrieb (410) derart steuert, dass der Azimutwinkel verstellt wird, bis sich die Rotorblattebene (108a) im Wesentlichen senkrecht oder rechtwinklig zur vorherrschenden Windrichtung (10) befindet,
wobei der Controller (200) dazu ausgestaltet ist, eine zweite Betriebsart zu aktivieren, wenn ein Sturm mit einer sehr großen Windgeschwindigkeit erfasst oder vorhergesagt worden ist, der auf die Windenergieanlage treffen kann, wobei der Controller (200) dazu ausgestaltet ist, den Azimutantrieb (410) so zu steuern, dass die Rotorblattebene (108a) sich im Wesentlichen parallel zu der vorherrschenden Windrichtung (10) befindet.
